# EUROPEAN PATENT APPLICATION

(11) **EP 3 001 010 A1**
(43) Date of publication of application: **30.03.2016**
(21) Application number: 15171125.6
(22) Date of filing: 09.06.2015
(51) Int. Cl.: F02B 37/02, F01D 25/14

(54) **SUPERCHARGER**

(30) Priority: 13.06.2014 JP 2014122530
(71) Applicant: Toyota Jidosha Kabushiki Kaisha, Toyota-shi, Aichi-ken 471-8571 (JP)
(72) Inventor: MATSUI, Hiroki, Toyota-shi Aichi-ken 471-8571 (JP)
(74) Representative: Intès, Didier Gérard André

(57) **Abstract**

A supercharger includes a turbine housing (15) and a pipe. An exhaust-gas inlet portion (17) of the turbine housing (15) is connected to an exhaust system member, and includes a scroll port (27) and a bypass port (28). The pipe is configured to cover an inner peripheral surface of the exhaust-gas inlet portion (17) in a state where at least part of the pipe is distanced from the inner peripheral surface, and includes an inserted portion which is positioned in the exhaust-gas inlet portion (17) of the turbine housing (15). An inner passage of the pipe is branched into a first branch passage (34) connected to the scroll port (27) and a second branch passage (35) connected to the bypass port (35). At least part of a pipe wall of the pipe is a part of the second branch passage (35), and is distanced from the inner peripheral surface of the exhaust-gas inlet portion (17).

## Description

### BACKGROUND OF THE INVENTION

### 1. Field of the Invention

The present invention relates to a supercharger provided in an internal combustion engine.

### 2. Description of Related Art

The supercharger rotates a compressor wheel by rotating a turbine wheel by exhaust gas so as to supercharge intake air. However, when heat of the exhaust gas is taken by a turbine housing to decrease a temperature of the exhaust gas before the exhaust gas reaches the turbine wheel, a driving amount of the turbine wheel decreases, so that a supercharging effect of the supercharger may decrease. Further, when the temperature of the exhaust gas decreases, warming up of a catalyst after engine starting might be delayed. In recent years, a water-cooling supercharger has been put to practical use in order to restrain overheating of the turbine housing. However, in such a supercharger, part of heat received by cooling water is released to the atmospheric air from a radiator. Therefore, as a heating value moved from the exhaust gas to the turbine housing increases, a heating value released to the atmospheric air through the cooling water increases, which results in that cooling heat loss of the engine increases.

Published Japanese Translation of PCT application No. 2013-509534 (JP-A-2013-509534) describes a supercharger in which a pipe is provided in an inlet through which exhaust gas flows in a turbine housing so that the pipe covers an inner peripheral surface of the inlet, thereby restraining the exhaust gas from making direct contact with the inner peripheral surface of the inlet of the turbine housing. In JP-A-2013-509534, a gap is formed between the pipe and the turbine housing so as to form a heat insulating space between the pipe and the turbine housing. Hereby, a heating value to be taken by the turbine housing is decreased, so as to restrain a temperature decrease of the exhaust gas.

The turbine housing is provided with a bypass passage that flows the exhaust gas by detouring around the turbine wheel. The bypass passage is provided with a wastegate valve. By adjusting an opening amount and an opening time of the wastegate valve, an amount of the exhaust gas passing through the bypass passage, that is, an amount of the exhaust gas that detours around the turbine to flow is adjusted, so that a driving amount of the turbine wheel is controlled.

### SUMMARY OF THE INVENTION

In the supercharger described in JP-A-2013-509534, the pipe is provided in the inlet of the turbine housing, but no pipe is provided in the bypass passage. Accordingly, heat of the exhaust gas is taken by the turbine housing through a wall surface of the bypass passage, so that the temperature decrease of the exhaust gas cannot be restrained sufficiently.

The present invention provides a supercharger that can restrain a temperature decrease of exhaust gas.

One aspect of the present invention is a supercharger including a turbine housing and a pipe. The turbine housing includes: a turbine room; a scroll passage communicating with the turbine room; and an exhaust-gas inlet portion connected to an exhaust system member placed on an upstream side relative to the turbine housing in an exhaust-gas flow direction, the exhaust-gas inlet portion including a scroll port and a bypass port, the scroll port being an inlet of the scroll passage, the bypass port detouring around the turbine room so as to communicate with a downstream side, in the exhaust-gas flowing direction, relative to the turbine room. The pipe is configured to cover an inner peripheral surface of the exhaust-gas inlet portion in a state where at least part of the pipe is distanced from the inner peripheral surface, the pipe including an inserted portion positioned in the exhaust-gas inlet portion from outside of the turbine housing. The pipe has an inner passage branched into a first branch passage and a second branch passage on the downstream side in the exhaust-gas flowing direction, the first branch passage being connected to the scroll port, the second branch passage being connected to the bypass port. At least part of a pipe wall of the pipe being a part of the second branch passage, the at least part of the pipe wall of the pipe is distanced from the inner peripheral surface of the exhaust-gas inlet portion.

According to the above configuration, the pipe inserted into the turbine housing constitutes an exhaust-gas main passage (the first branch passage) that guides the exhaust gas to the scroll passage, and a bypass passage (the second branch passage) that detours around the turbine room. This restrains the exhaust gas passing through the exhaust-gas main passage and the bypass passage from making direct contact with the turbine housing. Since the pipe is provided in the exhaust-gas inlet portion of the turbine housing in a state where the pipe is at least partially distanced from the inner peripheral surface of the exhaust-gas inlet portion, a gap is formed between the pipe and the turbine housing. Accordingly, the gap functions as a heat insulating space, so that heat input from the pipe to the turbine housing is restrained. Hereby, according to the above configuration, heat dissipation to the turbine housing through the bypass passage can be restrained as well as heat dissipation to the turbine housing through the exhaust-gas main passage. This makes it possible to decrease a heating value of the exhaust gas to be taken by the turbine housing, thereby restraining a temperature decrease of the exhaust gas.

In the above configuration, the pipe is inserted into the exhaust-gas inlet portion from outside of the turbine housing. This makes it possible to dispose the pipe without dividing the turbine housing, thereby achieving easy assembling of the supercharger.

The supercharger according to the above aspect may be configured such that the exhaust-gas inlet portion has a sectional area in a plane perpendicular to the exhaust-gas flowing direction ,the sectional area becomes larger toward the upstream side in the exhaust-gas flowing direction. According to the above configuration, the turbine housing is hard to hit the pipe in a process of inserting the pipe into the exhaust-gas inlet portion. This makes it possible to easily insert the pipe into the turbine housing.

The supercharger according to the above configuration may be configured such that: the pipe includes an upstream pipe, a first branch pipe, and a second branch pipe; the pipe has a forked shape that is branched into the first branch pipe and the second branch pipe on the downstream side of the upstream pipe in the exhaust-gas flowing direction; the first branch pipe includes the first branch passage; the second branch pipe includes the second branch passage; the second branch pipe projects toward the bypass port relative to the upstream pipe; and the turbine housing has a hollow portion sectioned by an outer peripheral surface of the second branch pipe, an outer peripheral surface of the upstream pipe, and the inner peripheral surface of the exhaust-gas inlet portion.

In the above configuration, the hollow portion is formed on an outer periphery of the bypass passage. Accordingly, the hollow portion functions as a heat insulating space, thereby making it possible to restrain a temperature decrease of the exhaust gas passing through the bypass passage appropriately. In the above configuration, the pipe has a shape in which the second branch pipe provided with the second branch passage connected to the bypass port projects toward the bypass port relative to the upstream pipe. This makes it possible to easily form the hollow portion by inserting the pipe into the turbine housing.

The supercharger according to the above aspect may be configured such that the pipe is fixed to the exhaust system member placed on the upstream side of the turbine housing in the exhaust-gas flow direction. When the pipe is directly fixed to the turbine housing, the pipe makes contact with the turbine housing. Accordingly, heat of the pipe is transmitted to the turbine housing through the portion where the pipe makes contact with the turbine housing.

In this regard, in the above configuration, the pipe is fixed to an exhaust system member such as an exhaust manifold or a cylinder head disposed on the upstream side, in the exhaust-gas flowing direction, relative to the turbine housing, that is, an exhaust system member that is different from the turbine housing. This prevents the pipe from making direct contact with the turbine housing, so that thermal transmission from the pipe to the turbine housing, thereby making it possible to further restrain the temperature decrease of the exhaust gas.

The supercharger according to the above aspect may be configured such that: the pipe includes a flange in an upstream end of the pipe in the exhaust-gas flowing direction, the flange being provided with insertion holes; and the pipe is fastened to the exhaust system member with bolts passed through the insertion holes from a hollow-portion side.

In the above configuration, head portions of the bolts are accommodated in the hollow portion, so that it is not necessary to provide, separately in the turbine housing, a space to accommodate the head portions of the bolts. This makes it possible to achieve downsizing of the supercharger.

Insertion holes to fix the pipe are disposed in a flange distanced from the pipe wall of the pipe constituting an exhaust-gas passage. This makes it possible to restrain overheat of the bolts due to heat of the exhaust gas. This accordingly makes it possible to restrain looseness of the bolts due to thermal expansion.

The supercharger according to the above aspect may be configured such that the pipe is integrated with the exhaust system member. The exhaust system member placed on the upstream side, in the exhaust-gas flowing direction, relative to the turbine housing, instead of fixing the pipe to the exhaust system member placed on the upstream side, in the exhaust-gas flow direction, relative to the turbine housing. According to the above configuration, since the pipe is integrated with the exhaust system member placed on the upstream side, in the exhaust-gas flowing direction, relative to the turbine housing, it is not necessary for the pipe and the turbine housing to make contact with each other in order to fix the pipe, and it is possible to restrain thermal transmission from the pipe to the turbine housing. Accordingly, it is possible to further restrain a temperature decrease of the exhaust gas.

According to such a configuration, the number of components is reduced in comparison with a case where the pipe is manufactured as a member different from the exhaust system member placed on the upstream side, in the exhaust-gas flowing direction, relative to the turbine housing. This makes it possible to reduce the number of assembling steps of the supercharger and man-hour for the manufacture of the supercharger, which allows easy manufacture of the supercharger.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view schematically illustrating a state where a supercharger of a first embodiment is assembled to an internal combustion engine;
FIG. 2 is a sectional view taken along a line indicated by an arrow II in FIG. 1;
FIG. 3 is a sectional view taken along a line indicated by an arrow III in FIG. 1;
FIG. 4 is a sectional view schematically illustrating a flow of exhaust gas in a supercharger of the embodiment;
FIG. 5 is a sectional view illustrating a configuration of a supercharger of a second embodiment;
FIG. 6 is a perspective view illustrating an assembling form of the supercharger of the embodiment with respect to an internal combustion engine; and
FIG. 7 is a sectional view illustrating another configuration of the supercharger.

### DETAILED DESCRIPTION OF EMBODIMENTS

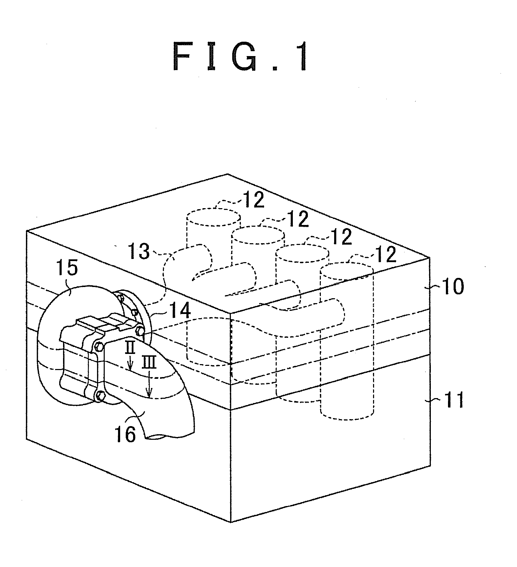

A first embodiment of a supercharger is described below with reference to FIGS. 1 to 4. As illustrated in FIG. 1, an internal combustion engine is provided with a cylinder head 10 and a cylinder block 11. A combustion chamber 12 is provided in the cylinder head 10 and the cylinder block 11. An exhaust manifold 13 configured to discharge exhaust gas inside the combustion chamber 12 is connected to the combustion chamber 12. The exhaust manifold 13 is integrated with the cylinder head 10.

A turbine housing 15 of the supercharger is fastened, with bolts, to an outlet portion 14 of the exhaust manifold 13 provided in the cylinder head 10. An exhaust pipe 16 is connected to a downstream end of the turbine housing 15 in an exhaust-gas flow direction. Accordingly, the exhaust gas discharged from the combustion chamber 12 to the exhaust manifold 13 flows to the exhaust pipe 16 through the turbine housing 15. The cylinder head 10 corresponds to an exhaust system member placed on an upstream side, in the exhaust-gas flow direction, relative to the turbine housing 15. In the following description, the upstream side in the exhaust-gas flowing direction is merely referred to as an exhaust-gas upstream side, and a downstream side in the exhaust-gas flowing direction is merely referred to as an exhaust-gas downstream side.

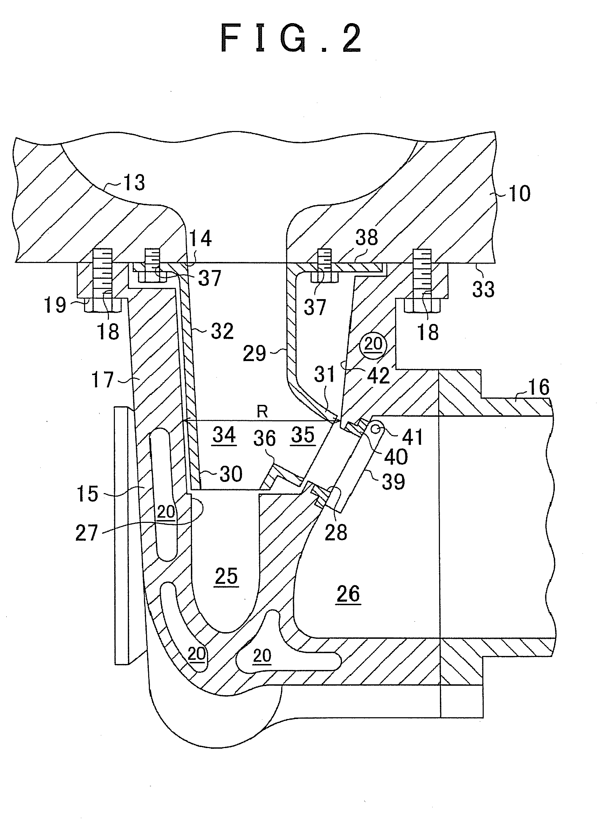

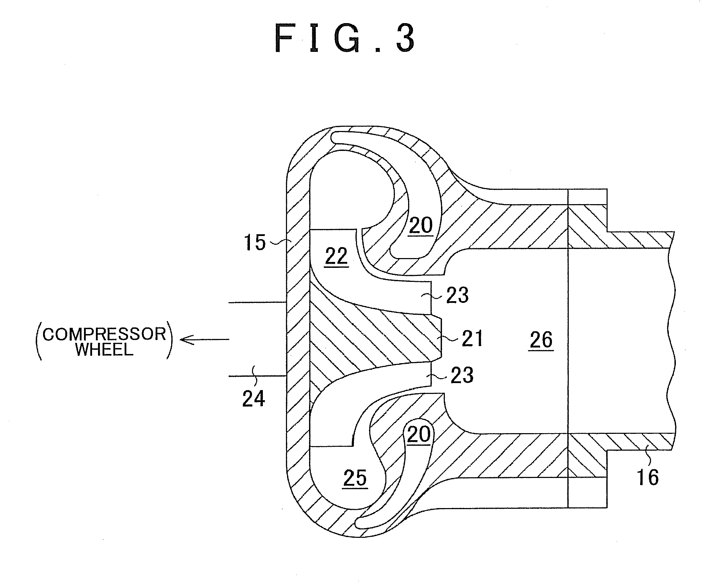

Referring now to FIGS. 2 and 3, a configuration of the supercharger is described in detail. As illustrated in FIG. 2, the turbine housing 15 is provided with an exhaust-gas inlet portion 17 connected to the cylinder head 10. A space is formed inside the exhaust-gas inlet portion 17, and its opening on the exhaust-gas upstream side is wider than an opening of an.outlet portion 14 of the exhaust manifold 13. A flange 19 including a plurality of insertion holes 18 is formed on an outer peripheral surface of an exhaust-gas upstream side end of the exhaust-gas inlet portion 17. The turbine housing 15 is fastened, with bolts, to the cylinder head 10 via the flange 19. The supercharger is a water-cooling supercharger, and a cooling passage 20 through which cooling water flows is formed in the turbine housing 15.

As illustrated in FIG. 3, the turbine housing 15 is provided with a turbine room 22 in which a turbine wheel 21 is accommodated. The turbine wheel 21 is provided with a plurality of turbine blades 23. One end of a rotating shaft 24 is fixed to the turbine wheel 21, and the turbine wheel 21 is provided in a relatively rotatable manner to the turbine housing 15. The other end of the rotating shaft 24 is fixed to that compressor wheel of the supercharger which is provided in an intake passage.

As illustrated in FIGS. 2 and 3, the turbine room 22 and the exhaust-gas inlet portion 17 communicate with each other via a scroll passage 25. An outlet chamber 26 is provided on an exhaust-gas downstream side of the turbine room 22.

Further, as illustrated in FIG. 2, the exhaust-gas inlet portion 17 is provided with a scroll port 27, which is an inlet of the scroll passage 25, and a bypass port 28 communicating the exhaust-gas inlet portion 17 with the outlet chamber 26.

A pipe 29 covering an inner peripheral surface of the exhaust-gas inlet portion 17 is accommodated in the exhaust-gas inlet portion 17. The pipe 29 has a forked shape in which an exhaust-gas downstream side part is branched into two branch pipes. A branch passage formed in one branch pipe is connected to the scroll port 27, and a branch passage formed in the other branch pipe is connected to the bypass port 28. The branch pipe provided with the branch passage connected to the scroll port 27 is referred to as a scroll-port-side branch pipe (a first branch pipe) 30, and the branch pipe provided with the branch passage connected to the bypass port 28 is referred to as a bypass-port-side branch pipe (a second branch pipe) 31. That part of the pipe 29 which is placed on an upstream side, in the exhaust-gas flowing direction, relative to the branch pipes 30, 31 is referred to as an upstream pipe 32. The upstream pipe 32 extends generally perpendicularly from a wall surface 33 of the cylinder head 10. The upstream pipe 32 is connected to the scroll-port-side branch pipe 30 in a straight-pipe shape, and the scroll-port-side branch pipe 30 extends generally perpendicularly relative to the wall surface 33 of the cylinder head 10. In the meantime, the bypass-port-side branch pipe 31 projects toward the bypass port 28 relative to the upstream pipe 32.

An exhaust-gas main passage 34 configured to guide exhaust gas flowed from the exhaust manifold 13 to the scroll passage 25 is constituted by the upstream pipe 32 and the scroll-port-side branch pipe 30 of the pipe 29, and a bypass passage 35 detouring around the turbine room 22 is constituted by the bypass-port-side branch pipe 31 and the bypass port 28.

A part where the bypass passage 35 is branched from the exhaust-gas main passage 34 is referred to as a branch portion 36. A flange 38 provided with a plurality of insertion holes 37 is formed in an exhaust-gas upstream side end of the pipe 29. The pipe 29 is fastened to the cylinder head 10 with bolts passed through the insertion holes 37. The pipe 29 is fastened in a state where the pipe 29 is distanced from the inner peripheral surface of the exhaust-gas inlet portion 17 over a whole circumference.

In such a supercharger, the bypass port 28 is provided with a wastegate valve 39, and a seat portion 40 on which the wastegate valve 39 sits. The seat portion 40 is molded in a ring shape, and is attached to an exhaust-gas downstream side end of the bypass port 28. A rotating shaft 41 is fixed to a base end portion of the wastegate valve 39. Accordingly, by rotating the rotating shaft 41 by an actuator, the wastegate valve 39 rotates around the base end portion. When the wastegate valve 39 is rotated counterclockwise in FIG. 2, the wastegate valve 39 is separated from the seat portion 40 so as to be in an open state, so that the bypass passage 35 communicates with the outlet chamber 26. In the meantime, when the wastegate valve 39 is rotated clockwise in FIG. 2 from the open state, the wastegate valve 39 abuts with the seat portion 40 so as to be in a close state, so that the communication between the bypass passage 35 and the outlet chamber 26 is blocked.

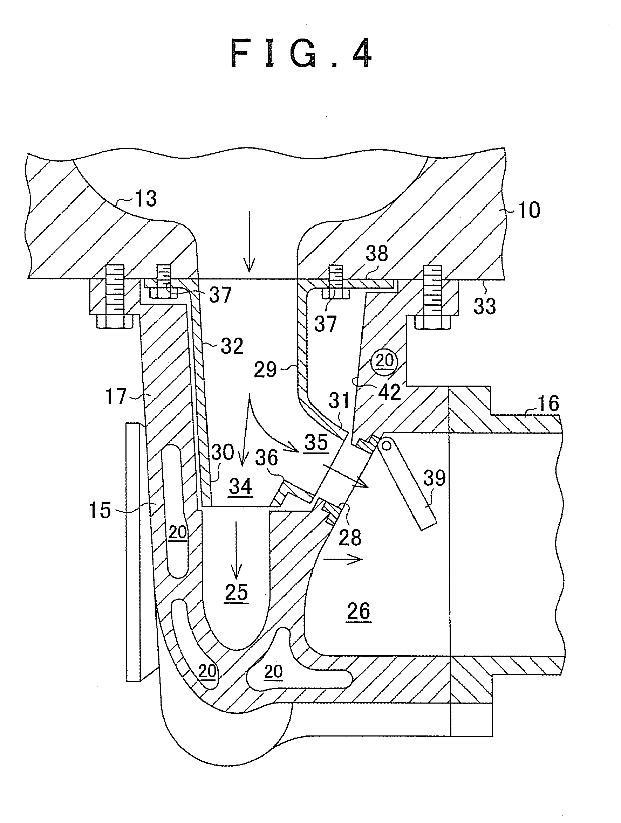

Accordingly, as illustrated in FIG. 4, in a case where the wastegate valve 39 is opened and the bypass passage 35 communicates with the outlet chamber 26, part of the exhaust gas discharged from the cylinder head 10 into the pipe 29 is discharged into the outlet chamber 26 through the bypass passage 35. That is, part of the exhaust gas flows by detouring around the turbine room 22.

In the meantime, in a case where the wastegate valve 39 is closed so that the bypass passage 35 is blocked, generally the whole exhaust gas flows to the scroll passage 25 through the exhaust-gas main passage 34. The exhaust gas that is flowed to the scroll passage 25 flows into the turbine room 22 and rotates the turbine wheel 21 accommodated in the turbine room 22. Hereby, a compressor wheel is rotated, so that intake air is supercharged. Then, the exhaust gas discharged from the turbine room 22 is discharged to the exhaust pipe 16 through the outlet chamber 26 connected to an exhaust-gas downstream side of the turbine room 22.

Next will be described an assembling method of such a supercharger. First, the pipe 29 is fastened, with bolts, to the outlet portion 14 of the cylinder head 10. Then, the turbine housing 15 is placed so as to cover the pipe 29, so that the pipe 29 is inserted into the exhaust-gas inlet portion 17. When the pipe 29 is inserted into the turbine housing 15 as such, the exhaust-gas main passage 34 and the bypass passage 35 are formed in the turbine housing 15. After that, the turbine housing 15 is fastened, with bolts, to the cylinder head 10.

The pipe 29 is formed in a straight-pipe shape so that the upstream pipe 32 and the scroll-port-side branch pipe 30 extend generally perpendicularly relative to the wall surface 33 of the cylinder head 10. The bypass-port-side branch pipe 31 projects toward the bypass port 28 relative to the upstream pipe 32. Accordingly, in a state where the pipe 29 is inserted into the exhaust-gas inlet portion 17, a hollow portion 42 is formed to be sectioned by an outer peripheral surface of the bypass-port-side branch pipe 31, an outer peripheral surface of the upstream pipe 32, and the inner peripheral surface of the exhaust-gas inlet portion 17. That is, the hollow portion 42 is formed on an outer periphery of the bypass-port-side branch pipe 31. Heads of some of the bolts that fasten the pipe 29 to the cylinder head 10 are accommodated in the hollow portion 42.

The space formed inside the exhaust-gas inlet portion 17 has a sectional area R in a plane perpendicular to the exhaust-gas flowing direction (an up-down direction in FIG. 2) which sectional area R becomes larger toward the upstream side in the exhaust-gas flowing direction. Next will be described an operation of the supercharger of the present embodiment.

In the present embodiment, the pipe 29 inserted into the turbine housing 15 constitutes the exhaust-gas main passage 34 that guides the exhaust gas to the scroll passage 25, and the bypass passage 35 that detours around the turbine room 22. This restrains the exhaust gas from making direct contact with the turbine housing 15. Since the pipe 29 is provided in the exhaust-gas inlet portion 17 of the turbine housing 15 in a state where the pipe 29 is distanced from the inner peripheral surface of the exhaust-gas inlet portion 17 over a whole circumference, a gap as a heat insulating space is formed between the pipe 29 and the turbine housing 15. Accordingly, heat dissipation to the turbine housing 15 through the bypass passage 35 is restrained as well as heat dissipation to the turbine housing 15 through the exhaust-gas main passage 34.

When the exhaust gas flows dividedly to the exhaust-gas main passage 34 and the bypass passage 35, the exhaust-gas flowing direction changes. Accordingly, the exhaust air is easy to make contact with the branch portion 36 branched into the exhaust-gas main passage 34 and the bypass passage 35. Because of this, a heat input amount from the exhaust gas is easy to increase at the branch portion 36. In this regard, in the present embodiment, the branch portion 36 is formed in the pipe 29 provided to be distanced from the turbine housing 15, thereby further restraining heat input to the turbine housing 15.

In the space formed inside the exhaust-gas inlet portion 17, the sectional area R in the plane perpendicular to the exhaust-gas flowing direction becomes larger toward the upstream side in the exhaust-gas flowing direction. Accordingly, the turbine housing 15 is hard to hit the pipe 29 in a process of inserting the pipe 29 into the exhaust-gas inlet portion 17.

The pipe 29 is configured such that the bypass-port-side branch pipe 31 projects toward the bypass port 28 relative to the upstream pipe 32. Accordingly, when the pipe 29 is inserted into the exhaust-gas inlet portion 17, the hollow portion 42 sectioned by the outer peripheral surface of the pipe 29 and the inner peripheral surface of the exhaust-gas inlet portion 17 is formed on the outer periphery of the bypass-port-side branch pipe 31. When the hollow portion 42 is formed as such, a heat insulating space larger than other portions is formed on the outer periphery of the bypass-port-side branch pipe 31. This further restrains thermal transmission from the pipe 29 to the turbine housing 15.

The pipe 29 is fixed to the cylinder head 10, so that the pipe 29 does not make contact with the turbine housing 15 over a whole circumference. This further restrains thermal transmission from the pipe 29 to the turbine housing 15. The pipe 29 is fixed to the cylinder head 10 having a lot of flat surface and a thick wall as compared with the turbine housing 15. This makes it possible to easily fix the pipe 29.

The flange 38 provided with the plurality of insertion holes 37 is formed in the pipe 29, and the pipe 29 is fastened to the cylinder head 10 with bolts passed through the insertion holes 37 from a hollow-portion-42 side, so that head portions of the bolts are accommodated in the hollow portion 42. The insertion holes 37 to fix the pipe 29 are disposed in the flange 38 distanced from a pipe wall of the pipe 29 constituting an exhaust-gas passage. This makes it possible to restrain direct transmission of heat from the exhaust gas to the bolts.

According to the first embodiment described above, it is possible to obtain the following effects. (1) It is possible to restrain the exhaust gas from making direct contact with the turbine housing 15, and to form a gap between the pipe 29 and the turbine housing 15. This makes it possible to decrease a heating value of the exhaust gas to be taken by the turbine housing 15, thereby restraining a temperature decrease of the exhaust gas.

(2) In the space formed inside the exhaust-gas inlet portion 17, the sectional area R in the plane perpendicular to the exhaust-gas flowing direction becomes larger toward the upstream side in the exhaust-gas flowing direction. This makes it possible to easily insert the pipe 29 into the turbine housing 15, thereby achieving easy assembling of a supercharger.

(3) The pipe 29 is configured such that the bypass-port-side branch pipe 31 projects toward the bypass port 28 relative to the upstream pipe 32. This makes it possible to easily form the hollow portion 42 by inserting the pipe 29 into the turbine housing 15. The hollow portion 42 is formed on the outer periphery of the bypass passage 35 constituted by the pipe 29. This makes it possible to restrain a temperature decrease of the exhaust gas passing through the bypass passage 35 appropriately.

(4) The pipe 29 is fixed to the cylinder head 10, so that the pipe 29 does not make direct contact with the turbine housing 15. This can restrain thermal transmission from the pipe 29 to the turbine housing 15, thereby making it possible to restrain a temperature decrease of the exhaust gas.

(5) Bolts are passed through the insertion holes 37 provided in the flange 38 of the pipe 29 from the hollow-portion-42 side, so that the pipe 29 is fastened to the cylinder head 10 with the bolts. Hereby, head portions of the bolts are accommodated in the hollow portion 42, so that it is not necessary to provide, separately in the turbine housing 15, a space to accommodate the head portions of the bolts, thereby making it possible to achieve downsizing of the supercharger. Further, overheat of the bolts due to heat of the exhaust gas can be restrained, thereby making it possible to restrain looseness of the bolts due to thermal expansion.

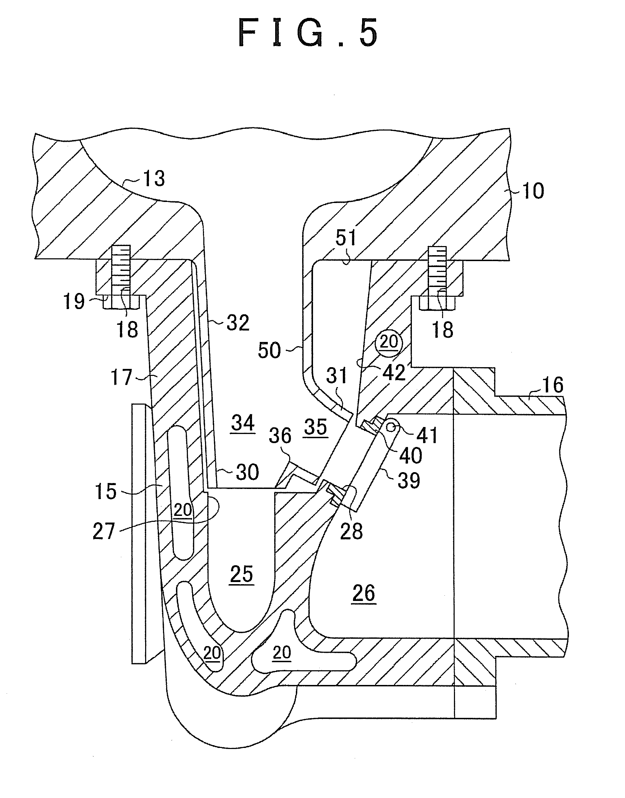

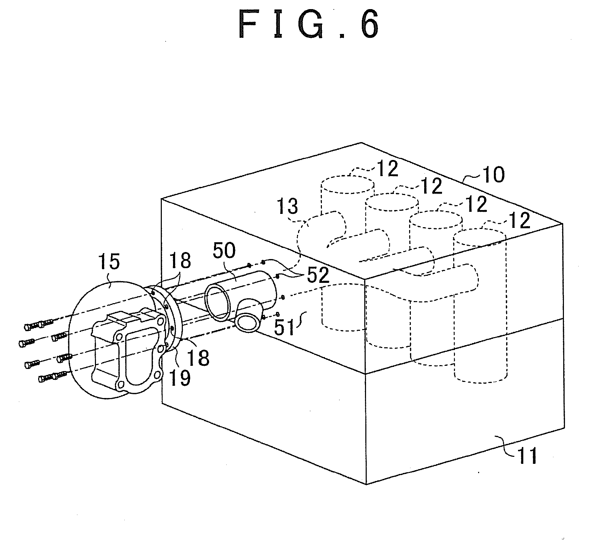

Next will be described a second embodiment of the supercharger, with reference to FIGS. 5, 6. A supercharger of the present embodiment is different from the first embodiment in that a pipe is formed integrally with a cylinder head. Other constituents have the same reference signs as those in the first embodiment, and detailed descriptions thereof are omitted.

As illustrated in FIG. 5, a pipe 50 is provided in an exhaust-gas inlet portion 17 of a turbine housing 15. The pipe 50 is formed integrally with a cylinder head 10, and projects outward from a wall surface 51 of the cylinder head 10. Note that, in such a pipe 50, an upstream pipe 32 connects the wall surface 51 of the cylinder head 10 with each branch pipe 30, 31. The pipe 50 has an internal space communicating with an exhaust manifold 13 formed in the cylinder head 10. Accordingly, exhaust gas discharged from a combustion chamber 12 is led to a turbine housing 15 through the exhaust manifold 13 and the pipe 50. A hollow portion 42 sectioned by an outer peripheral surface of the bypass-port-side branch pipe 31, an outer peripheral surface of the upstream pipe 32, and an inner peripheral surface of the exhaust-gas inlet portion 17 is formed on an outer periphery of that bypass-port-side branch pipe 31 of the pipe 50 which constitutes a bypass passage 35.

Next will be described an assembling method of such a supercharger. As illustrated in FIG. 6, the pipe 50 is formed integrally with the cylinder head 10 such that the pipe 50 projects from the wall surface 51 of the cylinder head 10. The turbine housing 15 is placed so as to cover the pipe 50, so that the pipe 50 is inserted into the exhaust-gas inlet portion 17. Then, bolts are passed through a plurality of bolt holes 52 provided in advance in the cylinder head 10 and insertion holes 18 provided in a flange 19 of the turbine housing 15, so that the turbine housing 15 is fastened to the cylinder head 10.

Next will be described an operation of the supercharger of the present embodiment. Since the cylinder head 10 is formed integrally with the pipe 50, it is not necessary for the pipe 50 and the turbine housing 15 to make contact with each other in order to fix the pipe 50. Further, in comparison with a case where the pipe 50 is manufactured as a member different from the cylinder head 10, the number of components is reduced.

According to the second embodiment described above, the following effects can be obtained in addition to effects similar to the above effects (1) to (3). (6) Since the cylinder head 10 is formed integrally with the pipe 50, the pipe 50 does not make contact with the turbine housing 15. This can restrain thermal transmission from the pipe 50 to the turbine housing 15, thereby making it possible to restrain a temperature decrease of the exhaust gas. This makes it is possible to reduce the number of assembling steps of the supercharger and man-hour for the manufacture of the supercharger, which allows easy manufacture of the supercharger.

Note that each of the above embodiments can be modified as follows. In the first embodiment, bolts are passed through the insertion holes 37 provided in the flange 38 from the hollow-portion-42 side, so that head portions of the bolts are accommodated in the hollow portion 42. However, the bolts do not need to be disposed within the hollow portion 42, provided that a space to accommodate the head portions of the bolts can be secured separately. Even with such a configuration, it is possible to yield the same effects as the effects (1) to (4).

In the first embodiment, the pipe 29 is fixed, with bolts, to the cylinder head 10. However, the pipe 29 may be fixed by use of other methods such as welding. In the first embodiment, the pipe 29 is fixed to the cylinder head 10, but the pipe 29 may be fixed to the turbine housing 15. Even with such a configuration, it is possible to yield the same effects as the effects (1) to (3).

In the first embodiment, the hollow portion 42 is formed, but such a configuration may be omitted. Even with such a configuration, it is possible to yield the same effects as the effects (1) and (2).

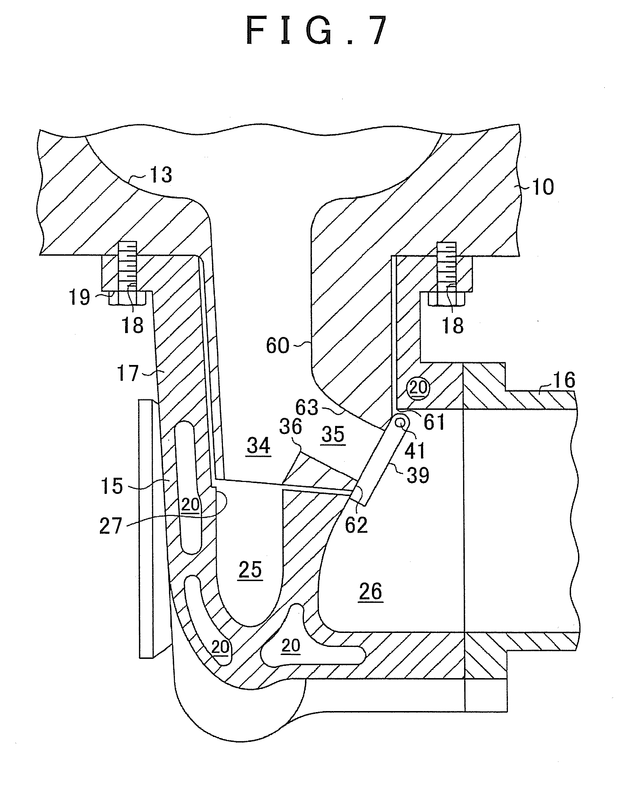

The second embodiment may be modified as illustrated in FIG. 7. Note that, this modification is different from the second embodiment in that a hollow portion 42 is not provided, and an opening of a bypass passage 35 of a pipe functions as a seat portion that abuts with a wastegate valve 39. Other constituents have the same reference signs as those in the second embodiment, and detailed descriptions thereof are omitted.

As illustrated in FIG. 7, a pipe 60 is provided in an exhaust-gas inlet portion 17 of a turbine housing 15. The pipe 60 is formed integrally with a cylinder head 10, and projects outward from a wall surface of the cylinder head 10. An outer shape of the pipe 60 is a generally circular pipe shape along an inner peripheral surface of the exhaust-gas inlet portion 17. Inside the pipe 60, an exhaust-gas main passage 34 connected to a scroll port 27, and a bypass passage 35 branched from the exhaust-gas main passage 34 and connected to a bypass port 61 are formed. The bypass port 61 of the exhaust-gas inlet portion 17 is provided with a wastegate valve 39. The wastegate valve 39 abuts with an opening 62 of the bypass passage 35 of the pipe 60. That is, the opening 62 of the bypass passage 35 of the pipe 60 functions as a seat portion. Note that, in this configuration, a pipe wall 63 of the pipe 60 forming the bypass passage 35 connected to the bypass port 61 is in a state where the pipe wall 63 is distanced from an inner peripheral surface of the exhaust-gas inlet portion 17 over a whole circumference. Even with such a configuration, it is possible to yield the same effects as the effects (1), (2), and (6).

As described in the above embodiments, in order to restrain a temperature decrease of the exhaust gas, it is preferable that the pipe 29, 50 do not make contact with the turbine housing 15 over a whole circumference so as to increase a heat insulation effect. However, for example, the pipe 29, 50 may make partial contact with the housing in such a manner that an exhaust-gas downstream side opening of the pipe 29, 50 abuts with the scroll port 27 or the bypass port 28. Even in such a configuration, it is still possible to restrain the temperature decrease of the exhaust gas, in comparison with the configuration in which the pipe 29, 50 makes contact with the turbine housing 15 over a whole circumference. As described in the above configurations, when the configuration in which the exhaust-gas downstream side opening of the pipe 29, 50 abuts with the scroll port 27 or the bypass port 28 is employed, a gap is hard to occur in a connection portion between the exhaust-gas downstream side opening of the pipe 29, 50 and each port 27, 28. This makes it possible to restrain that increase of a flow resistance of the exhaust gas which is caused by providing the pipe 29, 50.

In each of the above embodiments, the pipe 29, 50 is fixed to the cylinder head 10 formed integrally with the exhaust manifold 13 as an upstream exhaust system member placed in an exhaust-gas upstream side of the supercharger. However, the cylinder head 10 may be formed separately from the exhaust manifold 13. In such a case, the pipe 29, 50 may be fixed to the exhaust manifold 13 as the upstream exhaust system member. In a case where the turbine housing 15 is fixed to the exhaust manifold 13 or the like via a member different from the exhaust manifold 13 or the cylinder head 10, the pipe 29, 50 may be fixed to the different member as the upstream exhaust system member. Even with such a configuration, it is possible to yield the same effects as the effects (1) and (2).

In each of the above embodiments, the space formed inside the exhaust-gas inlet portion 17 is formed such that the sectional area R in the plane perpendicular to the exhaust-gas flowing direction becomes larger toward the upstream side in the exhaust-gas flowing direction. However, if the pipe 29, 50 can be inserted into the exhaust-gas inlet portion 17, a shape of the space formed inside the exhaust-gas inlet portion 17 may be changed appropriately. Even with such a configuration, it is still possible to yield the same effect as the effect (1).

In each of the above embodiments, angles formed by respective axes of the upstream pipe 32, the scroll-port-side branch pipe 30, and the bypass-port-side branch pipe 31 can be changed appropriately. The upstream pipe 32 of the pipe may be provided so as to be inclined relative to a wall surface of the flange 38 or the cylinder head 10.

In each of the above embodiments, the turbine housing 15 may be fixed to the cylinder head 10 with bolts, but may be fixed by use of other methods such as welding. Each of the above embodiments deals with a water-cooling supercharger as the supercharger, but a technical idea similar to each of the embodiments can be applied to superchargers other than the water-cooling supercharger.

## Claims

1. A supercharger **characterized by** comprising:
a turbine housing (15) including
a turbine room (22),
a scroll passage (25) communicating with the turbine room, and
an exhaust-gas inlet portion (17) connected to an exhaust system member (10, 13) placed on an upstream side of the turbine housing (15) in an exhaust-gas flow direction, the exhaust-gas inlet portion (17) including a scroll port (27) and a bypass port (28), the scroll port (27) being an inlet of the scroll passage (25), the bypass port (28) detouring around the turbine room (22) so as to communicate with a downstream side, in the exhaust-gas flowing direction, relative to the turbine room (22); and
a pipe (29, 50, 60) configured to cover an inner peripheral surface of the exhaust-gas inlet portion (17) in a state where at least part of the pipe (29, 50, 60) is distanced from the inner peripheral surface,
the pipe (29, 50, 60) including an inserted portion, the inserted portion being positioned in the exhaust-gas inlet portion (17) of the turbine housing (15),
the pipe (29, 50, 60) having an inner passage branched into a first branch passage (34) and a second branch passage (35) on the downstream side in the exhaust-gas flowing direction, the first branch passage (34) being connected to the scroll port (27), the second branch passage (35) being connected to the bypass port (28),
at least part of a pipe wall of the pipe (29, 50, 60) being a part of the second branch passage (34), the at least part of the pipe wall of the pipe (29, 50, 60) being distanced from the inner peripheral surface of the exhaust-gas inlet portion (17).

2. The supercharger according to claim 1, wherein
the exhaust-gas inlet portion (17) has a sectional area (R) in a plane perpendicular to the exhaust-gas flowing direction, the sectional area (R) becomes larger toward the upstream side in the exhaust-gas flowing direction.

3. The supercharger according to claim 1 or 2, wherein:
the pipe (29, 50, 60) includes an upstream pipe (32), a first branch pipe (30), and a second branch pipe (31);
the pipe (29, 50, 60) has a forked shape that is branched into the first branch pipe (30) and the second branch pipe (31) on the downstream side of the upstream pipe (32) in the exhaust-gas flowing direction;
the first branch pipe (30) includes the first branch passage (34);
the second branch pipe (31) includes the second branch passage (35);
the second branch pipe (31) projects toward the bypass port (28) relative to the upstream pipe (32); and
the turbine housing (15) has a hollow portion (42) sectioned by an outer peripheral surface of the second branch pipe (31), an outer peripheral surface of the upstream pipe (32), and the inner peripheral surface of the exhaust-gas inlet portion (17).

4. The supercharger according to any one of claims 1 to 3, wherein
the pipe (29, 50, 60) is fixed to the exhaust system member (10, 13) placed on the upstream side of the turbine housing (15) in the exhaust-gas flow direction.

5. The supercharger according to claim 3, wherein:
the pipe (29, 50, 60) includes a flange (38) in an upstream end of the pipe (29, 50, 60) in the exhaust-gas flowing direction, the flange (38) being provided with insertion holes (37); and
the pipe (29, 50, 60) is fastened to the exhaust system member (10, 13) with bolts passed through the insertion holes (37) from a hollow-portion side.

6. The supercharger according to any one of claims 1 to 3, wherein
the pipe (29, 50, 60) is integrated with the exhaust system member (10, 13).
